**Europäisches Patentamt**

**European Patent Office**

**Office européen des brevets**

(19)

(11) Veröffentlichungsnummer: **0 349 815 B1**

(12) ## EUROPÄISCHE PATENTSCHRIFT

(45) Veröffentlichungstag der Patentschrift:
07.08.91 Patentblatt 91/32

(51) Int. Cl.⁵: **B60T 11/06**

(21) Anmeldenummer: 89111078.5

(22) Anmeldetag: 19.06.89

(54) **Nachstellvorrichtung für eine Fahrzeug-Feststellbremse.**

(30) Priorität: 02.07.88 DE 3822436

(43) Veröffentlichungstag der Anmeldung:
10.01.90 Patentblatt 90/02

(45) Bekanntmachung des Hinweises auf die
Patenterteilung:
07.08.91 Patentblatt 91/32

(84) Benannte Vertragsstaaten:
ES FR GB IT

(56) Entgegenhaltungen:
DE-A- 1 555 185
DE-C- 562 118
DE-C- 764 201

(73) Patentinhaber: DAIMLER-BENZ
AKTIENGESELLSCHAFT
Mercedesstrasse 136
W-7000 Stuttgart 60 (DE)

(72) Erfinder: Senft, Ernst
Bahnhofstrasse 39
W-7141 Möglingen (DE)
Erfinder: Klemmer, Herbert
Hauffstrasse 12
W-7440 Nürtingen-Hardt (DE)
Erfinder: Uhl, Ullrich
Spitzweg 15
W-7080 Aalen (DE)
Erfinder: Näumann, Emil
Fürstenstrasse 54
W-7313 Reichenbach (DE)
Erfinder: Schefcsik, Nikolaus
Friedenstrasse 40
W-7052 Schwaikheim (DE)

**Beschreibung**

Die Erfindung betrifft eine Nachstellvorrichtung für eine Fahrzeug-Feststellbremse zum selbsttätigen Ausgleich von Seilstranglängungen, mit den Merkmalen des Oberbegriffes von Patentanspruch 1.

Eine diese Merkmale aufweisende Nachstellvorrichtung, die an der Karosserieunterseite freiliegend einzubauen ist, ist Gegenstand der nicht vorveröffentlichten Patentanmeldung DE-A-3741529.8.

Bei dieser Konstruktion ist ein Seiljoch durch zwei gleich ausgebildete und auf einer Lagerachse symmetrisch und verschwenkbar angeordnete Jochglieder gebildet, die jeweils einen Seilstrang halten und jeweils mit einem ein Abstützglied bildenden Rastzahn ausgestattet sind, der mit einer an der Zuglasche vorgesehenen Rastverzahnung mittels einer Drehfeder in Eingriff gehalten ist.

Die die Jochglieder tragende Lagerachse ist mit ihren Achsenden in jeweils einem sich in Spannrichtung der Seilstränge erstreckenden Führungsschlitz verschiebbar geführt, welche Führungsschlitze in einander gegenüberliegenden Schenkeln der U-förmigen Zuglasche vorgesehen sind.

Für den selbsttätigen Ausgleich von sich einstellenden Längungen in den Seilsträngen dient eine Spannvorrichtung, die ständig bestrebt ist, die Lagerachse samt Jochgliedern relativ zur Zuglasche in Spannrichtung zu verschieben. Hierzu ist diese mit einer sich einerseits an den Jochgliedern und andererseits an der Zuglasche abstützenden Druckfeder ausgestattet.

Aufgabe der Erfindung ist es nun, eine Nachstellvorrichtung mit den Merkmalen des Oberbegriffes von Patentanspruch 1 anzugeben, die sich durch eine kleinere Anzahl von Einzelteilen und auch in stark eingeschmutztem Zustand durch hohe Betriebssicherheit auszeichnet.

Ausgehend von einer Nachstellvorrichtung mit den Merkmalen des Oberbegriffes von Patentanspruch 1 wird diese Aufgabe erfindungsgemäß durch die kennzeichnenden Merkmale dieses Patentanspruches gelöst.

Die erfindungsgemäße Nachstellvorrichtung weist somit lediglich noch ein einteiliges Seiljoch, ein Abstützglied und eine Rastverzahnung auf, welche Teile sich konstruktiv derart auslegen und anordnen lassen, daß ein durch Schmutzpartikel verursachtes Klemmen der durch die Spannvorrichtung zu verstellenden Komponenten wirksam vermieden werden kann.

Die Anordnung der Rastverzahnung am Umfange einer auf der Lagerachse sitzenden oder mit dieser einstückig ausgebildeten Kurvenscheibe, die zum Nachstellen der Seilstränge durch die Drehfeder relativ zu dem mit der Rastverzahnung zusammenwirkenden, an der Zuglasche festgelegte Abstützglied verdreht wird, stellt dabei eine sich selbsttätig vollziehende Reinigung der einzelnen Rastausnehmungen beim Eingriff des Abstützgliedes in diese sicher, indem dabei Schmutz aus der betreffenden Rastausnehmung verdrängt wird. Hierzu ist es günstig, wenn die Rastausnehmungen der am Umfang stetig ansteigenden Kurvenscheibe, in deren Achsrichtung gesehen, muldenförmig sind und wenn das Abstützglied einen der Querschnittsform der Rastausnehmungen angepaßten Verrastungsteil aufweist.

Vorteilhafte Ausgestaltungen der Erfindung sind Gegenstand von Unteransprüchen.

In der Zeichnung ist ein Ausführungsbeispiel einer erfindungsgemäßen Nachstellvorrichtung dargestellt. Es zeigen :

Figur 1   eine teilweise aufgebrochene Ansicht der Nachstellvorrichtung, in Richtung des Pfeiles A der Figur 2 gesehen,

Figur 2   einen Längsschnitt der Nachstellvorrichtung,

Figur 3   einen Schnitt durch die Federkapsel der Spannvorrichtung entlang der Linie III-III der Figur 1 gesehen,

Figur 4   einen Teilschnitt entlang der Linie IV-IV der Figur 1.

Die Nachstellvorrichtung weist eine mit 10 bezeichnete Zuglasche auf, die mit ihrem einen Ende mittels einer Schwenkachse 12 an einem doppelarmigen Zwischenhebel 14 angelenkt ist, der sich mit seinem einen, kürzeren Hebelarm 16 an einem an der Karosserieunterseite eines Fahrzeuges feststehend angeordneten Wiederlager 18 abstützt und an dessen längerem Hebelarm 20 ein zu einem Handbremshebel oder zu einem Betätigungspedal einer Fußfeststellbremse führendes, die Seele eines Bowdenzuges 22 bildendes Zugseil 24 angelenkt ist.

Die Zuglasche 10 besitzt zwei im Abstand parallel zueinander angeordnete Laschenschenkel 26 und 28, zwischen denen ein als Ganzes mit 30 bezeichnetes Seiljoch in Längsrichtung derselben verschiebbar geführt ist. Dasselbe ist einstückig ausgebildet und weist zwei, jeweils von einer Längsseite der Zuglasche 10 abragende Jochendstücke 32 und 34 auf, die beispielsweise Einhängehaken bilden, in welche jeweils eine Öse 36 bzw. 38 eines Seilstranges 40 bzw. 42 einhängbar ist, die zu jeweils einer der einer Fahrzeugachse zugeordneten Radbremsen führen. Die beiden Seilstränge 40 und 42 bilden jeweils die Seele eines Bowdenzuges.

Das Seiljoch 30 sitzt verschwenkbar auf einer zwischen den Laschenschenkeln 26 und 28 angeordneten

2

Lagerachse 44, die mit ihren Führungszapfen bildenden Achsenden 46 und 48 in jeweils einen Führungsschlitz 50 bzw. 52 eingreift, die jeweils einen der Laschenschenkel 26, 28 durchsetzen und sich in deren Längsrichtung erstrecken.

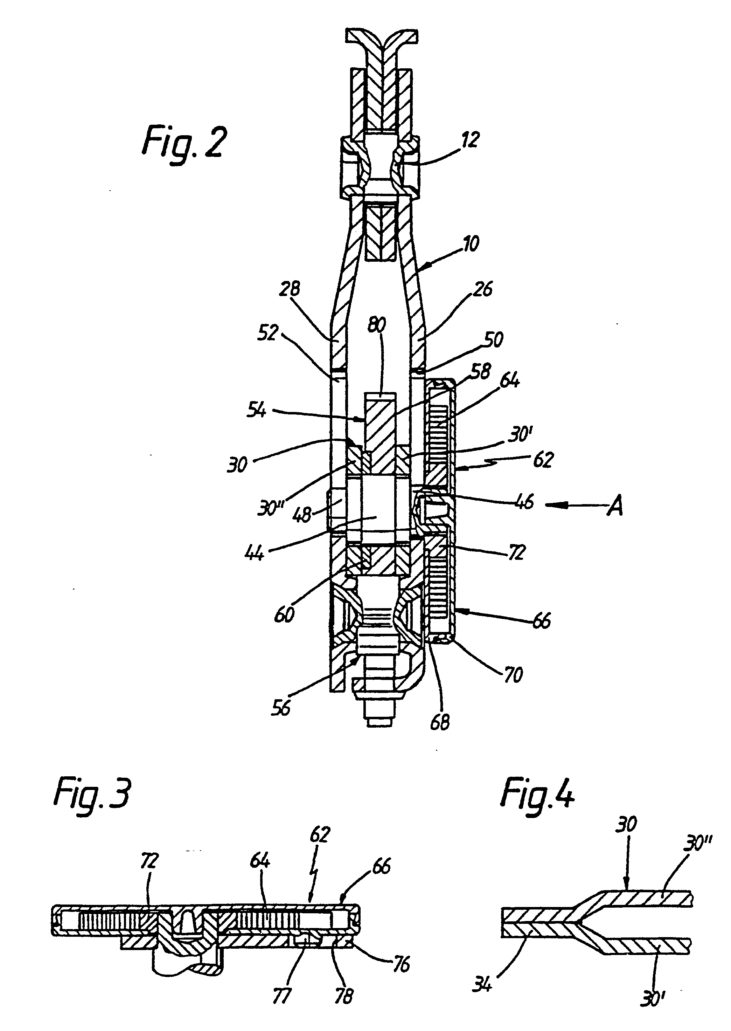

Auf der Lagerachse 44 sitzt außerdem eine als Ganzes mit 54 bezeichnete Kurvenscheibe, die einen Exzenter bildet. Diese stützt sich mit einem Umfangsteil auf einem Abstützglied 56 ab, das im Bereich des freien Endes der Zuglasche 10 zwischen deren Laschenschenkeln 26 und 28 beispielsweise durch Einnieten gehalten ist. Um die über die Seilstränge 40, 42 beim Betätigen der Feststellbremse wirksam werdenden Zugkräfte in die Nachstellvorrichtung, bezogen auf die Längsmitte des Führungszapfens 48 symmetrisch einzuleiten, ist das Seiljoch 30 mit zwei im Abstand parallel zueinander vorgesehenen Jochschenkeln 30' und 30" ausgestattet, deren freien Enden miteinander durch Schweißen verbunden sind und die die hakenförmigen Jochendstücke 32 bzw. 34 bilden. Diese Konstruktion des Seiljoches 30 ermöglicht es, die Kurvenscheibe 54 zwischen den Jochschenkeln 30', 30" auf der Lagerachse 44 drehfest anzuordnen (Figur 2).

Damit in axialer Richtung der Lagerachse 44 eine spielfreie Anordnung der Jochschenkel 30', 30" gewährleistet ist, liegt die Kurvenscheibe 54 mit ihrer einen Stirnfläche 58 an der Innenseite des Jochschenkels 30' plan an, während zwischen dem anderen Jochschenkel 30" und der Kurvenscheibe 54 eine beispielsweise aus geeignetem Kunststoff oder als Federscheibe hergestellte Reibscheibe 60 zwischengeschaltet ist, welche die Axialverspannung zwischen den besagten Teilen bewirkt.

Der auf diese Weise bewirkten Reibsicherung zwischen Kurvenscheibe 54 und Seiljoch 30 fällt noch eine weitere Aufgabe zu, die weiter unten näher erläutert wird.

Mit 62 ist als Ganzes eine Spannvorrichtung bezeichnet, mit deren Hilfe das Seiljoch 30 zum Ausgleich von sich in den Seilsträngen 40 und 42 ausbildenden Stranglängungen in Längsrichtung der Zuglasche 10 gemäß Figur 2 selbsttätig nach oben verschiebbar ist. Hierzu ist sie mit einer Spiralfeder 64 ausgestattet, die an der Außenseite beispielsweise des Laschenschenkels 26 in einer Federkapsel 66 untergebracht ist. Letztere ist durch einen Formkörper aus Kunststoff sowie aus zwei voneinander trennbaren Kapselteilstücken 68, 70 gebildet, wobei Kapselteilstück 70 einen abnehmbaren Verschlußdeckel bildet. Die Lagerachse 44 ragt hierbei mit ihrem zapfenförmigen Achsende 46 in die Federkapsel 66 hinein und trägt dort eine drehfest aufgebracht Mitnehmerscheibe 72, die vorzugsweise aus Kunststoff besteht und vorzugsweise auf einen gerändelten Umfangsteil des Führungszapfens 46 aufgepreßt ist. Auf den Umfang dieser Mitnehmerscheibe 72 ist die Spiralfeder 64 mit ihrer innersten Federwindung 64' aufgebracht, die mit ihrem freien Endstück 64" auf einer Umfangsabflachung 74 der Mitnehmerscheibe 72 aufliegt. Mit ihrem äußeren Federende 64'" ragt die Spiralfeder 64 in einen an den Umfang der Federkapsel 66 angeformten Kapselansatz 76 hinein.

Die Federkapsel 66 selbst sitzt als Ganzes auf dem Achsende 46 der Lagerachse 44 und ist gegen Verdrehen am Laschenschenkel 26 festgelegt.

Zu diesem Zweck ist an das dem Laschenschenkel 26 benachbarte Kapselteilstück 68 ein zylindrischer Ansatz 77 angeformt (Figur 3), der mit einem sich senkrecht zum Führungsschlitz 50 des Laschenschenkels 26 erstreckenden Schlitz 78 in Eingriff gebracht werden kann. Damit sind zum Spannen der Spiralfeder 64 die Voraussetzungen geschaffen, indem zunächst in die geöffnete Federkapsel die Spiralfeder 64 auf die Mitnehmerscheibe 72 aufgebracht und deren inneres Federende 64" auf die Mitnehmerscheibe 72 aufgebracht und deren äußeres Federende 64'" in den Kapselansatz 76 eingeführt wird, wonach die Federkapsel 66 mit der Mitnehmerscheibe 72 auf das Achsende 46 der Lagerachse 44 soweit aufgeschoben wird, daß sich der zylindrische Kapselansatz 77 noch außer Eingriff mit dem Schlitz 78 befindet. Danach kann die Federkapsel 66 zum Spannen der Spiralfeder 64 manuell entsprechend verdreht und schließlich so eingestellt werden, das deren zylindrischer Ansatz 77 in den diesem zugeordneten Schlitz 78 des Laschenschenkels 78 in Eingriff gebracht werden kann. Hierzu ist dann die Federkapsel 66 in ihre in Figur 2 gezeigte, endgültige Montagestellung zu bringen, indem hierzu deren Mitnehmerscheibe 72 vollends auf das Achsende 46 der Lagerachse 44 aufgeschoben wird.

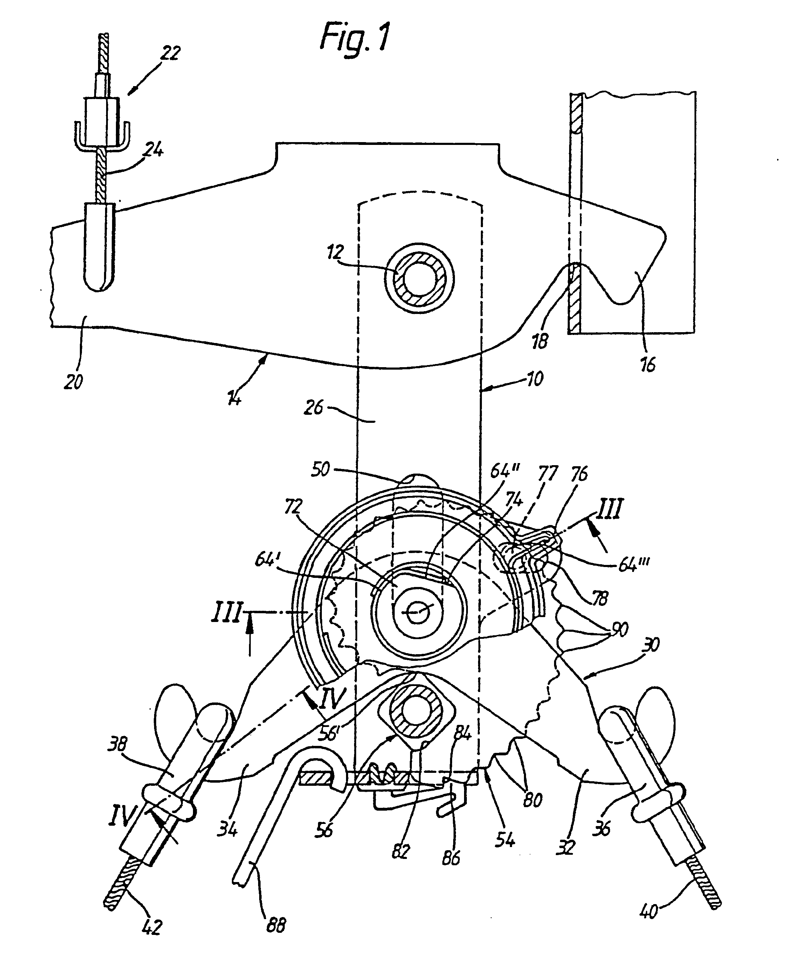

Wie aus Figur 1 ersichtlich ist, weist die exzentrische Kurvenscheibe 54, in deren Achsrichtung betrachtet, muldenförmige Rastausnehmungen 80 auf, die sich unmittelbar aneinander anschließen. Mit diesen Rastausnehmungen 80 kommt das Abstützglied 56, das im Querschnitt vorzugsweise Rautenform besitzt, mit seinem, bezogen, auf die Lagerachse 44, radial inneren, abgerundeten Kantenteil 56' in Eingriff. Die Kurvenscheibe 54 ist hierbei im Übergangsbereich zwischen ihrem inneren und äußeren Umfangsteil derart ausgebildet, daß in deren Ausgangsstellung das rautenförmige Abstützglied 56 in eine entsprechende Vertiefung 82 der Kurvenscheibe 54 im wesentlichen formschlüssig eingreift. Im Endbereich ihres äußeren Umfangsteils ist die Kurvenscheibe 54 mit einer Umfangsvertiefung 84 ausgestattet, der ein am freien Ende der Zuglasche 10 verankerter, vorzugsweise biegsamer Haltehaken 86 zugeordnet und mit dieser in Eingriff bringbar ist, wie es in Figur 1 dargestellt ist. Dieser Haltehaken 56 hat den Zweck, nach Vorspannen der Spiralfeder 64 die Kurvenscheibe 54 in ihrer in Figur 1 gezeigten Ausgangslage an der Zuglasche 10 zu fixieren. In montiertem Zustand der Nachstellvorrichtung läßt sich deren Zuglasche 10 mittels eines an der Karosserieunterseite eingehängten Zughakens 88 in ihrer Betriebsstellung festlegen.

Wie vorstehend erläutert, läßt sich die Nachstellvorrichtung nach erfolgtem Zusammenbau bei maximal gespannter Spiralfeder 64 durch den Haltehaken 86 blockieren (Figur 1). In blockiertem Zustand kann sie dann im Fahrzeug montiert werden, wobei zum Spannen der Seilstränge 40, 42 anschließend der Haltehaken 86 mit der Umfangsvertiefung 84 der Kurvenscheibe 54 außer Eingriff zu bringen ist. Dies hat zur Folge, daß sich die Spiralfeder 64 wieder in gewissem Umfange entspannen und dabei die Kurvenscheibe 54 entsprechend verdrehen wird. Die am Umfang radial ansteigende Kurvenscheibe 54 bewirkt bei ihrer Verdrehung relativ zum Abstützglied 56 eine radiale Verlagerung der Radachse 44 nebst Seiljoch 30 und Spannvorrichtung 62 in Längsrichtung der Führungsschlitze 50, 52 relativ zur Zuglasche 10, woraus wiederum das Straffen der Seilstränge 40, 42 zustande kommt.

Wie Figur 1 zeigt, ist der Radius des abgerundeten Kantenteils 56' des Abstützgliedes 56 kleiner gewählt als die Konkavkrümmung der Rastausnehmungen 80. Hierdurch wird der Vorteil erzielt, daß beim Überfahren der zwischen den Rastausnehmungen 80 vorhandenen Umfangsvorsprünge 90 der Kurvenscheibe 54 sich in den Rastausnehmungen 80 ggf. ansetzender Rost sowie sich anlagernde Schmutzpartikel zerrieben und aus den Rastausnehmungen 80 beim sich Hineinbewegen des abgerundeten Kantenteils 56' des Abstützgliedes 56 aus diesen verdrängt werden. Ein weiterer Vorteil der erläuterten Konstruktion besteht darin, daß aufgrund der keilförmigen Ausbildung des mit den Rastausnehmungen 80 in Eingriff kommenden Kantenteils 56' des Abstützgliedes 56 sich die Kurvenscheibe 54 so einstellen wird, daß sich der Kantenteil 56' in der Mitte einer Rastausnehmung 80 befindet. Beim Überfahren der die Rastausnehmungen 80 voneinander trennenden Umfangsvorsprünge 90 der Kurvenscheibe 54 werden deshalb die Seilstränge 40, 42 maximal gestrafft und danach sofort wieder etwas gelockert, wobei durch Verdrehen der Kurvenscheibe 54 diese Lockerung in engen Grenzen gehalten wird. Das dadurch zustande kommende Nachstellspiel gewährleistet, daß sich die betreffende Bremsanlage sicher lösen läßt.

Der Reibscheibe 60 fällt dabei noch die weitere Aufgabe zu, die Kurvenscheibe 54 in der Zuglasche 10 festzulegen und dadurch die Einstellung der Nachstellvorrichtung aufrecht zu erhalten.

Sollte die Nachstellvorrichtung ausfallen bzw. das selbsttätige Straffen der Seilstränge 40, 42 unterbleiben, so wird dies der Fahrer des betreffenden Fahrzeuges daran erkennen, daß sich beispielsweise der Betätigungsweg des zu bedienenden Pedals entsprechend vergrößern wird. Daran kann er erkennen, daß die Nachstellvorrichtung zu reparieren oder auszutauschen oder ist. Für den Fall das für einen Austausch eine Nachstellvorrichtung momentan nicht greifbar sein sollte, kann dann aber die Kurvenscheibe 54 manuell entsprechend verdreht und somit die Nachstellvorrichtung im Notfall nachgestellt werden.

Die erläuterte Konstruktion bietet außer ihres einfachen Aufbaues auch eine elegante Möglichkeit, die Spiralfeder 64 völlig vor einer Verschmutzung sichern sowie durch die Zuordnung von Abstützglied 56 und Kurvenscheibe 54 große Betriebslasten sicher aufnehmen zu können.

## Patentansprüche

1. Nachstellvorrichtung für eine Fahrzeug-Feststellbremse zum selbsttätigen Ausgleich von Seilstranglängungen, mit einer durch ein Zugseil (24) einer Betätigungsvorrichtung betätigbaren, länglichen Zuglasche (10), einem mit seinen von der Zuglasche (10) seitlich abragenden Endstücken (32, 34) jeweils einen Seilstrang (40, 42) haltenden Seiljoch (30), das, mit einer Lagerachse (44) versehen, längs der Zuglasche (10) zum Spannen der Seilstränge (40, 42) verschiebbar geführt ist, einer Spannvorrichtung (62) mit einer ständig wirksamen, vorgespannten, sich an der Zuglasche (10) abstützenden Feder (64) zum Verschieben des Seiljochs (30) in Spannverstellrichtung und einer entgegen der Spannverstellrichtung an der Zuglasche (10) wirksamen, einrastbaren Abstützung des Seiljochs (30), **dadurch gekennzeichnet,** daß die Spannvorrichtung (62) eine Kurvenscheibe (54) aufweist, die gemeinsam mit dem einstückig ausgebildeten Seiljoch (30) auf der Lagerachse (44) angebracht ist und durch die als Drehfeder ausgeführte Feder (Spiralfeder (64)) verdrehbar ist, daß die Kurvenscheibe (54) am Umfang mit Rastausnehmungen (80) versehen ist, die mit einem an der Zuglasche (10) festgelegten Abstützglied (56) zusammenwirken, und daß der Abstand der Rastausnehmungen (80) zur Lagerachse (44) in Nachstellrichtung zunimmt.

2. Nachstellvorrichtung nach Anspruch 1, **dadurch gekennzeichnet,** daß die Drehfeder eine auf der Lagerachse (44) sitzende Spiralfeder (64) ist.

3. Nachstellvorrichtung nach Anspruch 1 oder 2, **dadurch gekennzeichnet,** daß die Rastausnehmungen (80) der am Umfang stetig ansteigenden Kurvenscheibe (54), in deren Achsrichtung gesehen, muldenförmig sind und daß das Abstützglied (56) einen abgerundeten Verrastungsteil (56') aufweist, dessen Radius kleiner ist als derjenige der muldenartigen Rastausnehmungen (80).

4. Nachstellvorrichtung nach einem der vorhergehenden Ansprüche, **dadurch gekennzeichnet,** daß die Kurvenscheibe (54) zwischen zwei in ihren Endbereichen miteinander verbundenen und auf der Lagerachse (44) gelagerten Schenkeln (30', 30") des Seiljoches (30) angeordnet ist, die ihrerseits zwischen zwei Laschenschenkeln (26 und 28) der Zuglasche (10) vorgesehen sind, zwischen welchen das Abstützglied (56) gehalten ist.

5. Nachstellvorrichtung nach Anspruch 4, **dadurch gekennzeichnet,** daß die Spiralfeder (64) an der Außenseite des einen Laschenschenkels (26) vorgesehen ist.

6. Nachstellvorrichtung nach Anspruch 5, **dadurch gekennzeichnet,** daß die Spiralfeder (64) in einer am benachbarten Laschenschenkel (26) festgelegten Federkapsel (66) untergebracht ist.

7. Nachstellvorrichtung nach einem der vorhergehenden Ansprüche, **dadurch gekennzeichnet,** daß an der Zuglasche (10) ein Sicherungshaken (86) angeordnet ist, der mit einer am äußeren Kurvenendbereich der Kurvenscheibe (54) vorgesehenen Umfangsvertiefung (84) verhakbar ist.

8. Nachstellvorrichtung nach einem der vorhergehenden Ansprüche, **dadurch gekennzeichnet,** daß zwischen Kurvenscheibe (54) und wenigstens einem Jochschenkel (30") auf der Lagerachse (44) eine sich an diesem abstützende, vorgespannte Reibscheibe (60) angeordnet ist.

## Claims

1. An adjusting device for a vehicle parking brake for the automatic compensation of cable line elongations, with an oblong traction bracket (10) actuatable by means of a traction cable (24) of an actuation device, a cable yoke (30) holding by means of its end pieces (32, 34) protruding laterally from the traction bracket (10) respectively one cable line (40, 42), which cable yoke (30), fitted with a bearing axis (44) is slidably guided along the traction bracket (10) to tension the cable lines (40, 42), a tensioning device (62) with a pretensioned spring (64) continuously operative, acting on the traction bracket (10) for moving the cable yoke (30) in the tensioning adjustment direction, and a latchable support of the cable yoke (30) operative against the tensioning adjustment direction on the traction bracket (10), characterized in that the tensioning device (62) has a cam plate (54) which is mounted together with the cable yoke (30) designed as one piece on the bearing axis (44) and is rotatable by means of the spring (spiral spring (64)) designed as a torsion spring, in that the cam plate (54) is provided on its periphery with locking recesses (80) which cooperate with a support member (56) secured on the traction bracket (10), and in that the distance from the locking recesses (80) to the bearing axis increases in the adjustment direction.

2. An adjusting device according to claim 1, characterized in that the torsion spring is a spiral spring (64) situated on the bearing axis (44).

3. An adjusting device according to either claim 1 or 2, characterized in that the locking recesses (80) of the cam plate constantly rising at the periphery (54), seen in their axial direction, are through-shaped, and in that the support member (56) has a rounded latching part (56') the radius of which is smaller than that of the trough-shaped locking recesses (80).

4. An adjusting device according to one of the foregoing claims, characterized in that the came plate (54) is mounted between two limbs (30, 30") of the cable yoke (30) which are joined together at their end regions and are mounted on the bearing axis (44) and are provided between two bracket branches (26 and 28) of the traction bracket (10) between which the support member (56) is held.

5. An adjusting device according to claim 4, characterized in that the spiral spring (64) is provided on the outside of one branch (26) of the bracket.

6. An adjusting device according to claim 5, characterized in that the spiral spring (64) is housed in a spring cap (66) secured on the adjacent branch (26) of the bracket.

7. An adjusting device according to one of the foregoing claims, characterized in that a securing hook (86) is mounted on the traction bracket (10) and can be hooked with a peripheral recess (84) provided on the outer cam end area of the cam plate (54).

8. An adjusting device according to one of the foregoing claims, characterized in that, between the cam plate (54) and at least one limb (30") of the yoke, on the bearing axis (44), a pretensioned friction plate (60) is mounted, acting on the said limb (30") of the yoke.

## Revendications

1. Dispositif de rajustage pour un frein de stationnement de véhicule en vue d'une compensation automatique d'allongements de brins de câble, comportant une barre de traction (10) de forme allongée, pouvant être actionnée par un câble de traction (24) d'un dispositif d'actionnement, un tire-câble (30) maintenant un brin de câble respectif (40, 42) au moyen de ses parties extrêmes (32, 34) faisant saillie latéralement de la barre de traction (10) et qui, pourvu d'un pivot (44), est guidé en translation le long de la barre de traction (10) pour tendre les brins (40, 42) du câble, un dispositif de tension (62) pourvu d'un ressort précontraint, constamment actif et s'appuyant contre la barre de traction (10) pour déplacer le tire-câble (30) dans le sens de tension ainsi qu'un appui du tire-câble (30), agissant sur la barre de traction (10) en sens opposé au sens de tension et pouvant être encliqueté, caractérisé en ce que le dispositif de tension (62) comporte un disque formant came (54), qui est monté en même temps que le tire-câble (30), réalisé d'une seule pièce, sur le pivot (44) et qui peut être tourné par le ressort agencé comme un ressort de torsion (ressort spiral 64), en ce que le disque formant came (54) est pourvu, sur son pourtour, d'évidements d'arrêt (80) qui coopèrent avec un organe d'appui (56) fixé sur la barre de traction (10) et en ce que l'espacement des évidements d'arrêt (80) par rapport au pivot (44) augmente dans le sens de rajustage.

2. Dispositif de rajustage selon la revendication 1, caractérisé en ce que le ressort de torsion est un ressort spiral (64) monté sur le pivot (44).

3. Dispositif de rajustage selon la revendication 1 ou 2, caractérisé en ce que les évidements d'arrêt (80) du disque formant came (54), dont le pourtour est ascendant de façon constante, sont conformés, en considérant sa direction axiale, en forme d'encoches et en ce que l'organe d'appui (56) comporte une partie d'encliquetage (56') arrondie dont le rayon est plus petit que celui des évidements d'arrêt (80) en forme d'encoches.

4. Dispositif de rajustage selon une des revendications précédentes, caractérisé en ce que le disque formant came (54) est disposé entre deux branches (30', 30") du tire-câble (30) qui sont reliées entre elles dans leurs parties extrêmes, qui sont montées sur le pivot (44) et qui sont disposées quant à elles entre deux branches (26, 28) de la barre de traction (10), entre lesquelles l'organe d'appui (56) est maintenu.

5. Dispositif de rajustage selon la revendication 4, caractérisé en ce que le ressort spiral (64) est disposé sur le côté extérieur d'une des branches (26) de la barre de traction.

6. Dispositif de rajustage selon la revendication 5, caractérisé en ce que le ressort spiral (64) est logé dans une enveloppe de ressort (66) fixée sur la branche adjacente (26) de la barre de traction.

7. Dispositif de rajustage selon une des revendications précédentes, caractérisé en ce qu'il est prévu sur la barre de traction (10) un crochet de sécurité (86), qui peut être accroché dans un creux périphérique (84) prévu dans la zone extrême extérieure de came du disque formant came (54).

8. Dispositif de rajustage selon une des revendications précédentes, caractérisé en ce qu'il est prévu, entre le disque formant came (54) et au moins une branche (30") du tire-câble, sur le pivot (44), un disque de friction (60) précontraint et s'appuyant contre ce pivot.

# Fig.1

## Fig. 2

## Fig. 3

## Fig. 4